(19) Europäisches Patentamt / European Patent Office / Office européen des brevets

(11) **EP 2 712 228 B1**

(12) **EUROPEAN PATENT SPECIFICATION**

(45) Date of publication and mention
of the grant of the patent:
**23.09.2015 Bulletin 2015/39**

(21) Application number: **11857989.5**

(22) Date of filing: **25.07.2011**

(51) Int Cl.:
**H04W 28/16** (2009.01)    **H04B 7/02** (2006.01)

(86) International application number:
**PCT/CN2011/077566**

(87) International publication number:
**WO 2012/106924 (16.08.2012 Gazette 2012/33)**

(54) **METHOD, EQUIPMENT AND SYSTEM FOR COORDINATED MULTI-POINT TRANSMISSION/ RECEPTION**

VERFAHREN, ENDGERÄT UND SYSTEM FÜR KOORDINIERTE MEHRPUNKTÜBERTRAGUNG/ EMPFANG

PROCÉDÉ, ÉQUIPEMENT ET SYSTÈME D'ÉMISSION/RÉCEPTION MULTIPOINTS COORDONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.03.2014 Bulletin 2014/13**

(73) Proprietor: **Huawei Technologies Co., Ltd.
Longgang District
Shenzhen, Guangdong 518129 (CN)**

(72) Inventors:
• **CHEN, Lina
Shenzhen
Guangdong 518129 (CN)**
• **LOU, Qunfang
Shenzhen
Guangdong 518129 (CN)**

(74) Representative: **Körber, Martin Hans
Mitscherlich PartmbB
Patent- und Rechtsanwälte
Postfach 33 06 09
80066 München (DE)**

(56) References cited:
**WO-A1-2010/130277      CN-A- 101 815 331
CN-A- 101 873 661      CN-A- 101 895 921
CN-A- 102 076 096      US-A1- 2010 261 482**

• **ZTE: "Initial Evaluation Results for CoMP Phase 2", 3GPP DRAFT; R1-111518, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 5 May 2011 (2011-05-05), XP050491385, [retrieved on 2011-05-05]**

EP 2 712 228 B1

## Description

## TECHNICAL FIELD

The present invention relates to the field of network technologies, and in particular, to a method, a device, and a system for coordinated multi-point transmission.

## BACKGROUND

CoMP (Coordinated Multi-point Transission/reception, coordinated multi-point transmission) is one of key technologies of LTE-A (Long Term Evolution-Advanced, long term evolution-advanced), and is used to expand coverage of a high data rate and increase average throughput of a system, thereby improving performance of a cell edge user.

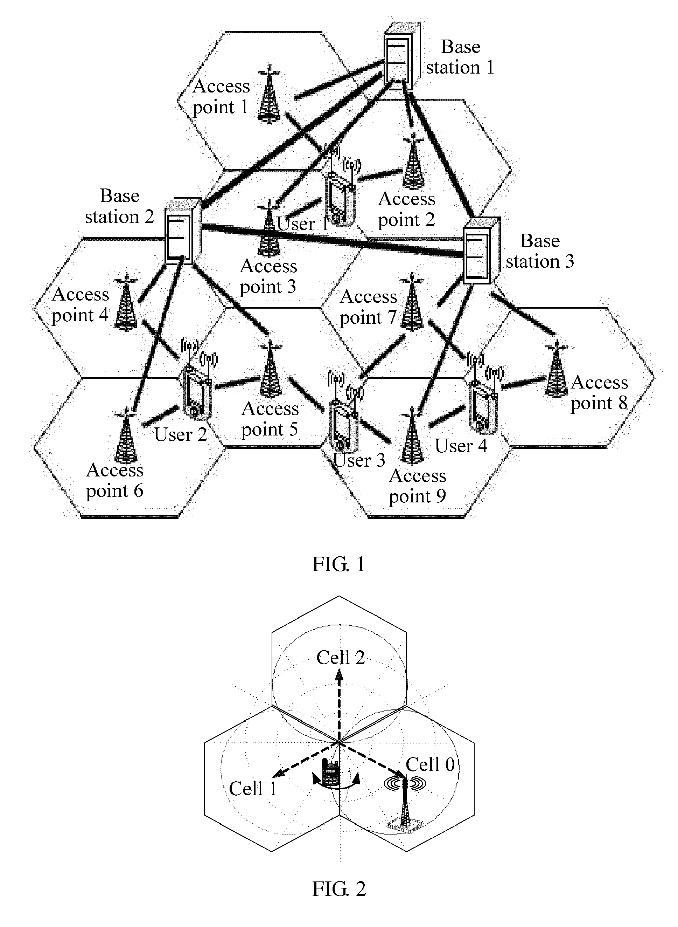

FIG. 1 is a schematic diagram of a CoMP technology. CoMP is a cooperative sending and receiving technology, where one base station (for example, eNodeB x in FIG. 1) is connected to several access points (for example, Point x in FIG. 1), and one access point may include one or more antennas. Multiple users (User Equipment, UE for short) (UE x) may be served by one or more access points located at one same base station or different base stations. A coordination center controller may obtain information from a distributed access point, and allocate a resource to meet a QoS (Quality of Service, quality of service) requirement of a user, thereby maximizing performance of an entire network.

In the CoMP technology, signals of a serving cell and multiple coordination cells may be simultaneously sent or received, which is equivalent to increasing the number of antennas at a transmit end or a receive end, and demodulation performance is improved through a multiple input multiple output (Multiple Input Multiple Output, MIMO for short) receiver.

A main principle of uplink-based intra-eNodeB (Intra-eNodeB) CoMP is that, antennas in different cells of one same base station are used for receiving a signal of a certain user, and a combined gain and an interference suppression gain of the signal received by the multiple antennas may be obtained at the same time, and the combined gain of the signal is greater for a user closer to a boundary between two cells. By taking FIG. 2 as an example, a user is located at a boundary between cells, a Cell 0 and a Cell 1, and the Cell 1 is a serving cell for the user. When the user is closer to the boundary of the cell Cell 0, power of a signal of the user received by the cell Cell 0 is greater, and a combined gain of the signal is higher.

However, it is very complicated to implement CoMP for all users. Due to a limitation on a processing capability of a device at present, it is very difficult to implement this solution in practice. In a case of joint reception for some cells with excessively low signal to interference plus noise ratios (SINR), performance may decrease instead due to the influence of channel estimation. Therefore, how to select a CoMP coordinated set and which UEs are to be selected, where CoMP is performed on the UEs for optimization in terms of performance and complexity, become very important.

Currently, a mainstream solution in the prior art is to determine whether to perform CoMP on a UE by using whether a difference between RSRP (Reference Signal Receiving Power, reference signal received power) of a serving cell and RSRP of another neighboring cell is greater than a predetermined threshold. However, this selection manner does not take an interference factor into consideration, and in practice, interference on the serving cell and interference on another cell are usually very different. Therefore, a UE selected according to an RSRP difference between the serving cell and the another cell is usually not a UE for which a highest gain is obtained when CoMP is performed, which reduces an effect of CoMP.

In the 3GPP draft R1-111518 "Initial Evaluation Results for CoMP Phase 2", dated May 5, 2011 a method for CoMP is discussed, wherein RSRP values of cells are obtained and wherein a cell whose RSRP is greater between the cell and the serving cell of the UE is combined into a coordinated set of the UE.

In US 2010/0261482 A2 a method for reducing inter-cell interference within a CoMP network architecture is described. Therein a distributed scheduling method is utilized, which accounts for the post-processing gain change due to signal processing and a new post-processing SIR measurement is utilized taking into account the spatial filtering at the transmitter or receiver.

In WO 2010/130277 A1 a method for selection of mobile stations in coordinated multipoint transmissions is disclosed. This method comprises the identification of UE's experiencing bad radio link performance using SINR measurements.

## SUMMARY

In view of this, embodiments of the present invention provide a method, a device, and a system for coordinated multi-point transmission, which can select a user equipment located at a cell overlapping area to perform coordinated multi-point transmission, thereby improving an effect of coordinated multi-point transmission.

To achieve the foregoing objectives, in one aspect, the present invention provides a method for CoMP coordinated multi-point transmission, where the method includes:

obtaining reference signal received power RSRP of a cell in a measurement set of a user equipment UE; determining that an RSRP difference between a first cell and a second cell other than a serving cell in the measurement set of the UE is greater than a preset threshold; and combining the first or the second cell with the serving cell of the UE into a coordinated set of the UE, the first or second cell to be combined being that having the greater RSRP, and

performing coordinated multi-point transmission on the UE.

In another aspect, the present invention further provides a device for coordinated multi-point transmission, where the device includes:

an RSRP obtaining unit, configured to obtain reference signal received power RSRP of allcells in a measurement set of a user equipment UE;
a determining unit, configured to determine that an RSRP difference between a first cell and a second cell other than a serving cell in the measurement set of the UE is greater than a preset threshold;
a coordinated set joining unit, configured to combine the first cell or the second with the serving cell of the UE into a coordinated set of the UE; the first or the second cell to be combined being that having the greater RSRP; and
a transmitting unit, configured to perform coordinated multi-point transmission on the UE.

In still another aspect, the present invention further provides a system, including the device for coordinated multi-point transmission.

It can be seen that, in the method, the device, and the system for coordinated multi-point transmission provided by the embodiments of the present invention, whether to perform CoMP on a UE is determined based on whether two cells whose RSRP difference is greater than a threshold exist in a measurement set of the UE other than a serving cell. In the embodiments of the present invention, a UE near a cell overlapping area can be selected, and a relatively high gain can be obtained for such UE during CoMP, thereby improving an effect of CoMP.

**BRIEF DESCRIPTION OF DRAWINGS**

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.

FIG. 1 is a schematic diagram of a CoMP technology in the prior art;
FIG. 2 is a schematic diagram of a cell of an Intra-eNodeB CoMP technology;
FIG. 3 is a schematic flow chart of a method for coordinated multi-point transmission according to an embodiment of the present invention;
FIG. 4 is a schematic flow chart of a method for coordinated multi-point transmission according to another embodiment of the present invention;
FIG. 5 is a schematic diagram of an application scenario for a method for coordinated multi-point transmission according to an embodiment of the present invention;
FIG. 6 is a schematic structural diagram of a device for coordinated multi-point transmission according to an embodiment of the present invention; and
FIG. 7 is a schematic structural diagram of a device for coordinated multi-point transmission according to another embodiment of the present invention.

**DESCRIPTION OF EMBODIMENTS**

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

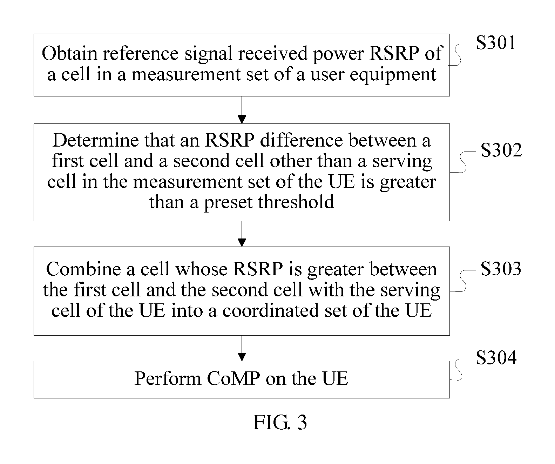

FIG. 3 is a schematic flow chart of a method for coordinated multi-point transmission according to an embodiment of the present invention. An embodiment of the present invention provides a method for coordinated multi-point transmission, where, as shown in FIG. 3, the method includes:

Step S301: Obtain reference signal received power RSRP of a cell in a measurement set of a user equipment (UE).

Specific implementation of obtaining RSRP may adopt the prior art, for example, a method defined in the 3GPP 36.214 protocol. The present invention does not limit implementation of obtaining RSRP.

In addition, the measurement set may be determined by using the following method: A base station of a serving cell of the UE delivers a periodic measurement configuration to the UE. After receiving the periodic measurement configuration, the UE measures all available cells of a configured frequency to obtain signal quality, and reports the signal quality to the base station of the serving cell. The base station adds a cell whose signal quality exceeds a threshold set on a network to the measurement set of the UE. It may also be stipulated that cells whose signal quality ranks in the top several places are added to the measurement set of the UE, which is not limited by the present invention. Cells in the measurement set may belong to different base stations, or may belong to one same base station.

Step S302: Determine that an RSRP difference between a first cell and a second cell other than a serving cell in the measurement set of the UE is greater than a preset threshold.

Subtraction may be performed on RSRP values of every two cells other than the serving cell in the measurement set of the UE to obtain an absolute value of an RSRP difference between two cells other than the serving cell in the measurement set, and the absolute value of the difference is compared with a threshold preset in advance.

For example, when there are two cells other than the serving cell of the UE in the measurement set, subtraction is performed on RSRP of the two cells for comparison with a preset threshold. It is assumed that there are three cells other than the serving cell of the UE in the measurement set cell 1, cell 2, and cell 3. Subtraction is performed on RSRP values of every two cells of cell 1, cell 2, and cell 3 to obtain |RSRP cell 1 - RSRP cell 21, |RSRP cell 1 - RSRP cell 3|, and |RSRP cell 3 - RSRP cell 2|, and the three values are compared with the preset threshold. As long as there is one of the three values which is greater than the preset threshold (or greater than or equal to the preset threshold, which is not limited in the present invention), CoMP may be performed on the UE. When a first cell and a second cell that meet the foregoing condition exist, it indicates that the UE is located at an overlapping area of the serving cell and another cell, and a relatively high gain is obtained for the UE during CoMP.

Step S303: Combine a cell whose RSRP is greater between the first cell and the second cell with the serving cell of the UE into a coordinated set of the UE, and perform CoMP on the UE. A specific method for coordinated multi-point transmission may also be implemented through the prior art.

In the method provided by the embodiment, whether to perform CoMP on a UE is determined based on whether two cells whose RSRP difference is greater than a threshold exist in a measurement set of the UE other than a serving cell. Interference between cells other than the serving cell is usually close. Therefore, a UE near a cell overlapping area can be selected more accurately, and a relatively high gain can be obtained for such UE during CoMP, thereby improving an effect of CoMP.

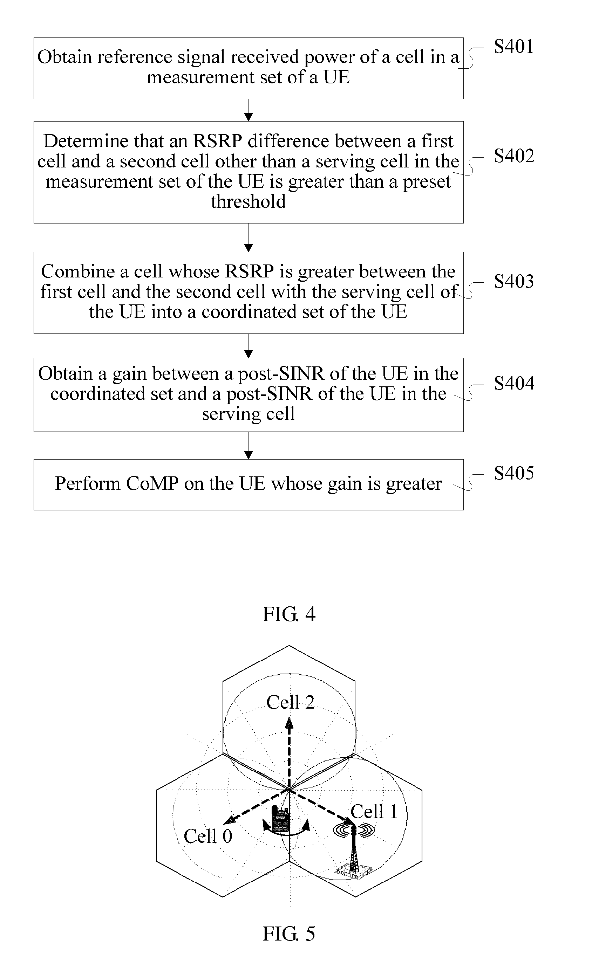

FIG. 4 is a schematic flow chart of a method for coordinated multi-point transmission according to another embodiment of the present invention. As shown in FIG. 4, the method for coordinated multi-point transmission in embodiment includes:

Step S401: Obtain reference signal received power (RSRP) of a cell in a measurement set of a UE.

For a specific method, reference may be similarly made to step S301 in the foregoing embodiment.

Step S402: Determine that an RSRP difference between a first cell and a second cell other than a serving cell in the measurement set of the UE is greater than a preset threshold. For a specific method, reference may be similarly made to step S302 in the foregoing embodiment.

Step S403: Combine a cell whose RSRP is greater between the first cell and the second cell with the serving cell of the UE into a coordinated set of the UE. For a specific method, reference may be similarly made to step S303 in the foregoing embodiment.

Step S404: After step S403, obtain a gain between a post-SINR (Posted-SINR) of the UE in the coordinated set and a post-SINR of the UE in the serving cell. In a scenario where coverage is limited, a relative gain may be used as the gain in step S404.

The relative gain may be determined according to the following formula:

$$\frac{\log_2\left(1+SINR_1\right)-\log_2\left(1+SINR_0\right)}{\log_2\left(1+SINR_0\right)},$$

where $SINR_0$ is the post-SINR of the UE in the serving cell of the UE, and $SINR_1$ is a post-SINR of the UE in a cell other than the serving cell in the coordinated set of the UE, where the cell other than the serving cell in the coordinated set of the UE may also be called a coordination cell of the UE; and

$\log_2\left(1+SINR_1\right)$ is throughput which is of the UE in the coordinated set of the UE and is determined according to the Shannon's formula, and $\log_2(1+SINR_0)$ is throughput which is of the UE in the serving cell of the UE and is determined according to the Shannon's formula.

In a scenario where a capacity is limited, an absolute gain may be used as the gain in step S404.

The absolute gain may be determined according to the following formula:

$$\log_2\left(1+SINR_1\right)-\log_2\left(1+SINR_0\right),$$

where $SINR_0$ is the post-SINR of the UE in the serving cell of the UE, and $SINR_1$ is the post-SINR of the UE in the cell other than the serving cell in the coordinated set of the UE; and

$\log_2(1+SINR_1)$ is the throughput which is of the UE in the coordinated set of the UE and is determined according to the Shannon's formula, and $\log_2(1+SINR_0)$ is the throughput which is of the UE in the serving cell of the UE and is determined according to the Shannon's formula.

Step S405: Perform CoMP on a UE whose gain is greater than the preset threshold. In practice, alternatively, UEs may also be sorted according to gains obtained through calculation in step S404, and a UE with a highest gain is selected preferably for performing CoMP, until a processing resource is used up.

In the embodiment, by taking a case that a hardware resource is limited into consideration, it is possible that CoMP can be performed on only a part of UEs. After UEs near a cell overlapping area are selected through step S401 to step S403, these UEs are sorted according to their gains, and CoMP is preferably performed on a UE with a highest gain, so that efficiency of CoMP may be fully improved with a limited resource.

It should be noted that, in the embodiment, the step for obtaining the gains of the UEs may be performed in each transmission time interval (TTI), or may be performed on each resource block (RB). Certainly, a granularity implemented in the step for obtaining the gains of the UEs may be divided according to another granularity.

In each of the foregoing embodiments, cells in the measurement set of the UE may belong to one same base station, or at least two cells may belong to different base stations.

If cells in the measurement set of the UE belong to one same base station, intra-eNodeB CoMP (Intra-eNodeB CoMP) is implemented when CoMP is performed on the UE.

If at least two cells in the measurement set of the UE belong to different base stations and the coordinated set of the UE also includes cells that belong to at least two base stations, inter-eNodeB CoMP is implemented when CoMP is performed on the UE.

Specific implementation of the method for coordinated multi-point transmission in the present invention is described in detail in the following through several specific examples.

Example 1: As shown in FIG. 5, it is assumed that a serving cell of a UE is Cell 0. In a measurement set of the UE, three cells are included, namely, a serving cell of the UE Cell0 and two other neighboring cells Cell 1 and Cell 2.

First, RSRP of Cell 0, Cell 1, and Cell 2 are obtained, and are marked as RSRP0, RSRP1, and RSRP2, respectively.

When it is determined that an absolute value of a difference between the RSRP1 and the RSRP2 is greater than a preset threshold, it indicates that the UE is located at a cell overlapping area. In FIG. 5, the UE is located at an overlapping area between cells Cell 0 and Cell 1, and a cell corresponding to a greater RSRP value between the RSRP1 and the RSRP2 and the serving cell Cell 0 are included in a coordinated set of the UE. For example, when the absolute value of the difference between the RSRP1 and the RSRP2 is greater than the preset threshold, and it may be measured that RSRP1> RSRP2 due to a fact the UE is closer to Cell1 than to Cell2, Cell 0 and Cell 1 are included in the coordinated set of the UE. Next, CoMP is performed on the UE.

Example 2: It is assumed that there are three UEs, which may be marked as UE1, UE2, and UE3 respectively, Cell0 is a serving cell of all the three UEs, and measurement sets all include Cell0 and other two neighboring cells Cell 1 and Cell 2.

First, a process as described in the foregoing example 1 for obtaining of RSRP and formation of a coordinated set of each UE is separately implemented for UE1, UE2, and UE3.

Next, a gain between a post-SINR of UE1 in the coordinated set of UE1 and a post-SINR of UE1 in the serving cell Cell0 of UE1 is calculated, and is marked as D1. A gain between a post-SINR of UE2 in the coordinated set of UE2 and a post-SINR of UE2 in the serving cell Cell0 of UE2 is calculated, and is marked as D2. A gain between a post-SINR of UE3 in the coordinated set of UE3 and a post-SINR of UE3 in the serving cell Cell0 of UE3 is calculated, and is marked as D3.

It is assumed that D2>D1>D3, and UE1, UE2, and UE3 are sorted according to order of their gains as follows: UE2, UE1, UE3.

CoMP is preferably performed on UE2, and then UE1. If a processing resource is used up after CoMP is performed on UE1, CoMP is not performed on UE3.

In addition, there may be multiple first cells and second cells that meet a condition in the foregoing embodiments, for example, in a scenario such as that a UE is located at a cell overlapping area between base stations, or a base station is divided into six cells. It is assumed that in a measurement set of a UE, five cells are included, namely, Cell 0, Cell 1, Cell 2, Cell 3, and Cell 4. Cell 0 is a serving cell of the UE. After measurement, RSRP of Cell 1, Cell 2, Cell 3, and Cell 4 are RSRP1, RSRP2, RSRP3, and RSRP4, respectively.

It is found through comparison that: An absolute value of a difference between the RSRP1 and the RSRP2 is greater than a preset threshold; an absolute value of a difference between the RSRP3 and the RSRP4 is also greater than the preset threshold. In a case that a hardware resource is sufficient, a cell whose RSRP is greater in each pair of cells whose RSRP difference is greater than the preset threshold and that meet a condition may be used as a coordination cell of the UE, and the coordination cell of the UE and the serving cell of the UE are included in a coordinated set of the UE. It is assumed that, in the foregoing example, there are two pairs of cells that meet the condition, namely, {cell1, cell2} and {cell3, cell4}, RSRP corresponding to the two pairs of cells may be respectively marked as {RSRP1, RSRP2} and {RSRP3, RSRP4}. It is assumed that, |RSRP1-RSRP2| and |RSRP3-RSRP4| are both greater than the preset threshold, and RSRP1>RSRP2 and RSRP3>RSRP4. In this case, RSRP1 and RSRP3 may both be used as coordination cells of the UE. In this way, the coordinated set of the UE includes Cell 0, Cell1, and Cell3.

However, sometimes, in a case that the hardware resource is insufficient, the number of coordination cells in the coordinated set of the UE is limited. In this case, cells whose RSRP is greater in each pair of the cells whose RSRP difference is greater than the preset threshold and that meet the condition need to be compared, and a cell whose RSRP is greater is preferably selected as the coordination cell of the UE. Alternatively, whether RSRP of a cell whose RSRP is greater among the cells whose RSRP difference is greater than the preset threshold is also greater than the preset threshold is determined through comparison, and then the cell whose RSRP is greater is used as the coordination cell of the UE. For example, in the foregoing example, it is further assumed that, a difference between the RSRP1 and the RSRP3 of two first cells is also greater than the threshold. Then, only Cell1 whose RSRP is greater is used as the coordination cell of the UE. In this case, the coordinated set of the UE includes only Cell 0 and Cell1.

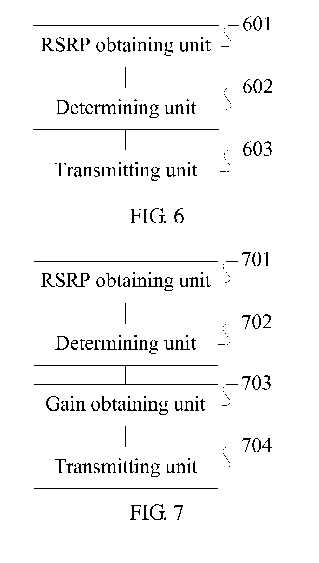

FIG. 6 is a schematic structural diagram of a device for coordinated multi-point transmission according to an embodiment of the present invention. As shown in FIG. 6, the device for coordinated multi-point transmission includes:

An RSRP obtaining unit 601 is configured to obtain reference signal received power RSRP of all cells in a measurement set of a user equipment UE.

A determining unit 602 is configured to determine that an RSRP difference between a first cell and a second cell other than a serving cell in the measurement set of the UE is greater than a preset threshold.

A transmitting unit 603 is configured to combine a cell whose RSRP is greater between the first cell and the second cell with the serving cell of the UE into a coordinated set of the UE, and perform coordinated multi-point transmission on the UE.

In practice, the device for coordinated multi-point transmission in the embodiment may be a base station.

Specific implementation of obtaining RSRP by the RSRP obtaining unit 601 may adopt the prior art, for example, a method defined in the 3GPP 36.214 protocol. The present invention does not limit implementation of obtaining RSRP. Cells in the measurement set may belong to different base stations or may belong to one same base station.

The determining unit 602 may perform subtraction on RSRP values of every two cells other than the serving cell in the measurement set of the UE to obtain an absolute value of an RSRP difference between two cells other than the serving cell in the measurement set, and compare the absolute value of the difference with the threshold preset in advance.

FIG. 7 is a schematic structural diagram of a device for coordinated multi-point transmission according to another embodiment of the present invention. As shown in FIG. 7, the device for coordinated multi-point transmission includes:

An RSRP obtaining unit 701 is configured to obtain reference signal received power RSRP of all cells in a measurement set of a user equipment UE. Specific implementation of obtaining RSRP by the RSRP obtaining unit 701 may adopt the prior art, for example, a method defined in the 3GPP 36.214 protocol. The present invention does not limit implementation of obtaining RSRP. Cells in the measurement set may belong to different base stations or may belong to one same base station.

A determining unit 702 is configured to determine that an RSRP difference between a first cell and a second cell other than a serving cell in the measurement set of the UE is greater than a preset threshold. The determining unit 702 may perform subtraction on RSRP values of every two cells other than the serving cell in the measurement set of the UE to obtain an absolute value of an RSRP difference between two cells other than the serving cell in the measurement set, and compare the absolute value of the difference with the threshold preset in advance.

A gain obtaining unit 703 is further included, where the gain obtaining unit 703 is configured to obtain a gain between a post-SINR of the UE in the coordinated set of the UE and a post-SINR of the UE in the serving cell of the UE.

Specifically, in a scenario where coverage is limited, the gain obtained by the gain obtaining unit 703 may be a relative gain, where the relative gain may be determined according to the following formula:

$$\frac{\log_2\left(1+SINR_1\right)-\log_2\left(1+SINR_0\right)}{\log_2\left(1+SINR_0\right)},$$

where $SINR_0$ is the post-SINR of the UE in the serving cell of the UE, and $SINR_1$ is a post-SINR of the UE in a cell other than the serving cell in the coordinated set of the UE, where the cell other than the serving cell in the coordinated set of the UE may also be called a coordination cell of the UE; and $\log_2\left(1+SINR_1\right)$ is throughput which is of the UE in the coordinated set of the UE and is determined according to the Shannon's formula, and $\log_2(1+SINR_0)$ is throughput which is of the UE in the serving cell of the UE and is determined according to the Shannon's formula.

In a scenario where a capacity is limited, the gain obtained by the gain obtaining unit 703 may be an absolute gain.

The absolute gain may be determined according to the following formula:

$$\log_2\left(1+SINR_1\right)-\log_2\left(1+SINR_0\right),$$

where $SINR_0$ is the post-SINR of the UE in the serving cell of the UE, and $SINR_1$ is the post-SINR of the UE in the cell other than the serving cell in the coordinated set of the UE; and

$\log_2(1 + SINR_1)$ is the throughput which is of the UE in the coordinated set of the UE and is determined according to the Shannon's formula, and $\log_2(1+SINR_0)$ is the throughput which is of the UE in the serving cell of the UE and is determined according to the Shannon's formula.

A process of obtaining gains of UEs by the gain obtaining unit 703 may be performed in each transmission time interval (TTI), or may be performed on each resource block (RB). Certainly, a granularity implemented in the step for obtaining the gains of the UEs may be divided according to another granularity.

A transmitting unit 704 is specifically configured to select a UE whose gain is greater than a preset threshold to perform coordinated multi-point transmission.

The device for coordinated multi-point transmission in the embodiment may be a base station.

In addition, an embodiment of the present invention further provides a system, where the system includes the device for coordinated multi-point transmission in the foregoing device embodiments.

Exemplary implementation manners of the present invention are described in the foregoing. It should be noted that, a person of ordinary skill in the art may further make several modifications and variations without departing from the principle of the present invention, and these modifications and variations should also be construed as falling within the protection scope of the present invention.

**Claims**

1.  A method for coordinated multi-point, CoMP, transmission, comprising:

    obtaining (S301, S401) reference signal received power, RSRP, of a cell in a measurement set of a user equipment, UE;
    **characterised by** determining (S302, S402) that an RSRP difference between a first cell and a second cell other than a serving cell in the measurement set of the UE is greater than a preset threshold; and
    combining (S303, S403) the first cell or the second cell with the serving cell of the UE into a coordinated set of the UE, the first or second cell to be combined being that having the greater RSRP, and performing (S304) CoMP transmission on the UE.

2.  The method according to claim 1, further comprising:

    obtaining (S404) a gain between a post-signal to interference plus noise ratios, SINR, of the user equipment (UE) in the coordinated set and a post-signal to interference plus noise ratios, post-SINR, of the UE in the serving cell; wherein the performing (S304) CoMP transmission on the UE comprises:

    selecting the UE whose gain is greater than a preset threshold to perform CoMP transmission.

3.  The method according to claim 2, wherein the gain is a relative gain or an absolute gain.

4.  The method according to claim 2 or 3, wherein the obtaining (S404) a gain between a post-SINR of the UE in the coordinated set and a post-SINR of the UE in the serving cell comprises:

    obtaining, in each transmission time interval , TTI, the gain between the post-SINR of the UE in the coordinated set and the post-SINR of the UE in the serving cell.

5.  The method according to claim 2 or 3, wherein the obtaining (S404) a gain between a post-SINR of the UE in the coordinated set and a post-SINR of the UE in the serving cell comprises:

    obtaining, on each resource block , RB, the gain between the post-SINR of the UE in the coordinated set and the post-SINR of the UE in the serving cell.

6.  The method according to any one of claims 1 to 5, wherein, cells in the measurement set of the UE belong to one same base station, or at least two of cells in the measurement set of the UE belong to different base stations.

7.  A device for coordinated multi-point, CoMP, transmission, comprising:

    an reference signal received power, RSRP, obtaining unit (601, 701), configured to obtain RSRP of all cells in a measurement set of a user equipment , UE;
    **characterized by** a determining unit (602, 702), configured to determine that an RSRP difference between a first cell and a second cell other than a serving cell in the measurement set of the UE is greater than a preset threshold; and
    a transmitting unit (603, 704), configured to combine the first cell or the second cell with the serving cell of the UE into a coordinated set of the UE, the first or the second cell to be combined being that haveing the greater RSRP, and to perform CoMP transmission on the UE.

8.  The device according to claim 7, further comprising:

a gain obtaining unit (703), configured to obtain a gain between a post-signal to interference plus noise ratio, post-SINR, of the UE in the coordinated set and a post-SINR of the UE in the serving cell; wherein

the transmitting unit (603, 704) is specifically configured to select the UE whose gain is greater than a preset threshold to perform CoMP transmission.

9. The device according to claim 7, wherein the gain obtaining unit (703) is specifically configured to obtain, in each transmission time interval, TTI, the gain between the post-SINR of the UE in the coordinated set and the post-SINR of the UE in the serving cell; or the gain obtaining unit (703) is specifically configured to obtain, on each resource block, RB, the gain between the post-SINR of the UE in the coordinated set and the post-SINR of the UE in the serving cell.

10. The device according to any one of claims 7 to 9, wherein the device is a base station.

11. A system, comprising the device for coordinated multi-point , CoMP, transmission according to any one of claims 7 to 9.

**Patentansprüche**

1. Verfahren zur koordinierten Mehrpunkt-Übertragung, CoMP-Übertragung, das die folgenden Schritte aufweist:

   Beschaffen (S301, S401) einer Referenzsignal-Empfangsleistung, RSRP, einer Zelle in einer Messungsmenge eines Benutzerendgeräts, UE;
   **gekennzeichnet durch** Feststellen (S302, S402), dass eine RSRP-Differenz zwischen einer ersten Zelle und einer zweiten, anderen Zelle als eine bedienende Zelle, in der Messungsmenge des UE größer als ein voreingestellter Schwellenwert ist; und
   Kombinieren (S303, S403) der ersten Zelle oder der zweiten Zelle mit der bedienenden Zelle des UE in eine koordinierte Menge des UE, wobei die zu kombinierende erste oder zweite Zelle diejenige ist, die die größere RSRP aufweist, und Durchführen (S304) der CoMP-Übertragung am UE.

2. Verfahren nach Anspruch 1, das ferner aufweist:

   Beschaffen (S404) einer Verstärkung zwischen einem Post-"Signal to Interference plus Noise Ratio", post-SINR, des Benutzerendgeräts, UE, in der koordinierten Menge und einem Post-"Signal to Interference plus Noise Ratio", post-SINR, des UE in der bedienenden Zelle; wobei das Durchführen (S304) der CoMP-Übertragung am UE aufweist:

   Auswählen des UE, dessen Verstärkung größer als ein voreingestellter Schwellenwert ist, um eine CoMP-Übertragung durchzuführen.

3. Verfahren nach Anspruch 2, wobei die Verstärkung eine relative Verstärkung oder eine absolute Verstärkung ist.

4. Verfahren nach Anspruch 2 oder 3, wobei das Beschaffen (S404) einer Verstärkung zwischen einem post-SINR des UE in der koordinierten Menge und einem post-SINR des UE in der bedienenden Zelle aufweist:

   Beschaffen in jedem Übertragungszeitintervall, TTI, der Verstärkung zwischen dem post-SINR des UE in der koordinierten Menge und dem post-SINR des UE in der bedienenden Zelle.

5. Verfahren nach Anspruch 2 oder 3, wobei das Beschaffen (S404) einer Verstärkung zwischen einem post-SINR des UE in der koordinierten Menge und einem post-SINR des UE in der bedienenden Zelle aufweist:

   Beschaffen an jedem Ressourcenblock, RB, der Verstärkung zwischen dem post-SINR des UE in der koordinierten Menge und dem post-SINR des UE in der bedienenden Zelle.

6. Verfahren nach einem der Ansprüche 1 bis 5, wobei Zellen in der Messungsmenge des UE zu ein und derselben Basisstation gehören, oder mindestens zwei der Zellen in der Messungsmenge des UE zu unterschiedlichen Basisstationen gehören.

7. Vorrichtung zur koordinierten Mehrpunkt-Übertragung, CoMP-Übertragung, die Folgendes aufweist:

   eine Referenzsignal-Empfangsleistungs-Beschaffungseinheit, RSRP-Beschaffungseinheit, (601, 701), die konfiguriert ist, eine RSRP aller Zellen in einer Messungsmenge eines Benutzerendgeräts, UE, zu beschaffen;
   **gekennzeichnet durch**
   eine Feststellungseinheit (602, 702), die konfiguriert ist festzustellen, dass eine RSRP-Differenz zwischen einer ersten Zelle und einer zweiten, anderen Zelle als eine bedienende Zelle in der Messungsmenge des UE größer als ein voreingestellter Schwellenwert ist; und

eine Übertragungseinheit (603, 704), die konfiguriert ist, die erste Zelle oder die zweite Zelle mit der bedienenden Zelle des UE zu einer koordinierten Menge des UE zu kombinieren, wobei die zu kombinierende erste oder zweite Zelle diejenige ist, die die größere RSRP aufweist, und die CoMP-Übertragung am UE durchzuführen.

8. Vorrichtung nach Anspruch 7, die ferner aufweist:

eine Verstärkungsbeschaffungseinheit (703), die konfiguriert ist, eine Verstärkung zwischen einem Post-"Signal to Interference plus Noise Ratio", post-SINR, des UE in der koordinierten Menge und einem post-SINR des UE in der bedienenden Zelle zu beschaffen; wobei die Übertragungseinheit (603, 704) insbesondere konfiguriert ist, das UE auszuwählen, dessen Verstärkung größer als ein voreingestellter Schwellenwert ist, um die CoMP-Übertragung durchzuführen.

9. Vorrichtung nach Anspruch 7, wobei die Verstärkungsbeschaffungseinheit (703) insbesondere konfiguriert ist, in jedem Übertragungszeitintervall, TTI, die Verstärkung zwischen dem post-SINR des UE in der koordinierten Menge und dem post-SINR des UE in der bedienenden Zelle zu beschaffen; oder die Verstärkungsbeschaffungseinheit (703) insbesondere konfiguriert ist, an jedem Ressourcenblock, RB, die Verstärkung zwischen dem post-SINR des UE in der koordinierten Menge und dem post-SINR des UE in der bedienenden Zelle zu beschaffen.

10. Vorrichtung nach einem der Ansprüche 7 bis 9, wobei die Vorrichtung eine Basisstation ist.

11. System, das die Vorrichtung zur koordinierten Mehrpunkt-Übertragung, CoMP-Übertragung, nach einem der Ansprüche 7 bis 9 aufweist.

**Revendications**

1. Procédé pour une transmission multipoint coordonnée, CoMP, comprenant l'étape suivante :

obtenir (S301, S401) une puissance reçue de signal de référence, RSRP, d'une cellule dans un ensemble de mesures d'un équipement d'utilisateur, UE ;
**caractérisé par** les étapes suivantes : déterminer (S302, S402) qu'une différence de RSRP entre une première cellule et une seconde cellule autre qu'une cellule de desserte dans l'ensemble de mesures de l'UE est supérieure à un seuil prédéfini ; et

combiner (S303, S403) la première cellule ou la seconde cellule avec la cellule de desserte de l'UE en un ensemble coordonné de l'UE, la première ou la seconde cellule à combiner étant celle ayant la RSRP la plus élevée, et exécuter (S304) une transmission CoMP sur l'UE.

2. Procédé selon la revendication 1, comprenant en outre l'étape suivante :

obtenir (S404) un gain entre des rapports post-signal/interférence plus bruit, post-SINR, de l'équipement d'utilisateur (UE) dans l'ensemble coordonné et des rapports post-signal/interférence plus bruit, post-SINR, de l'UE dans la cellule de desserte ;
l'exécution (S304) d'une transmission CoMP sur l'UE comprenant l'étape suivante :

sélectionner l'UE dont le gain est supérieur à un seuil prédéfini pour exécuter une transmission CoMP.

3. Procédé selon la revendication 2, dans lequel le gain est un gain relatif ou un gain absolu.

4. Procédé selon la revendication 2 ou la revendication 3, dans lequel l'obtention (S404) d'un gain entre un post-SINR de l'UE dans l'ensemble coordonné et un post-SINR de l'UE dans la cellule de desserte comprend l'étape suivante :

obtenir, dans chaque intervalle de temps de transmission, TTI, le gain entre le post-SINR de l'UE dans l'ensemble coordonné et le post-SINR de l'UE dans la cellule de desserte.

5. Procédé selon la revendication 2 ou la revendication 3, dans lequel l'obtention (S404) d'un gain entre un post-SINR de l'UE dans l'ensemble coordonné et un post-SINR de l'UE dans la cellule de desserte comprend l'étape suivante :

obtenir, sur chaque bloc de ressources, RB, le gain entre le post-SINR de l'UE dans l'ensemble coordonné et le post-SINR de l'UE dans la cellule de desserte.

6. Procédé selon l'une quelconque des revendications 1 à 5, dans lequel des cellules dans l'ensemble de mesures de l'UE appartiennent à une même station de base, ou au moins deux des cellules dans l'ensemble de mesures de l'UE appartiennent à des stations de base différentes.

7. Dispositif pour une transmission multipoint coordonnée, CoMP, comprenant :

une unité d'obtention de puissance reçue de signal de référence, RSRP (601, 701) configurée pour obtenir une RSRP de toutes les cellules dans un ensemble de mesures d'un équipement d'utilisateur, UE ;

**caractérisé par** :

une unité de détermination (602, 702), configurée pour déterminer qu'une différence de RSRP entre une première cellule et une seconde cellule autre qu'une cellule de desserte dans l'ensemble de mesures de l'UE est supérieure à un seuil prédéfini ; et une unité de transmission (603, 704), configurée pour combiner la première cellule ou la seconde cellule avec la cellule de desserte de l'UE en un ensemble coordonné de l'UE, la première ou la seconde cellule à combiner étant celle ayant la RSRP la plus élevée, et exécuter une transmission CoMP sur l'UE.

8. Dispositif selon la revendication 7, comprenant en outre :

une unité d'obtention de gain (703), configurée pour obtenir un gain entre un rapport post-signal/interférence plus bruit, post-SINR, de l'UE dans l'ensemble coordonné et un post-SINR de l'UE dans la cellule de desserte ; où l'unité de transmission (603, 704) est spécifiquement configurée pour sélectionner l'UE dont le gain est supérieur à un seuil prédéfini pour exécuter une transmission CoMP.

9. Dispositif selon la revendication 7, dans lequel l'unité d'obtention de gain (703) est spécifiquement configurée pour obtenir, dans chaque intervalle de temps de transmission, TTI, le gain entre le post-SINR de l'UE dans l'ensemble coordonné et le post-SINR de l'UE dans la cellule de desserte ; ou l'unité d'obtention de gain (703) est spécifiquement configurée pour obtenir, sur chaque bloc de ressources, RB, le gain entre le post-SINR de l'UE dans l'ensemble coordonné et le post-SINR de l'UE dans la cellule de desserte.

10. Dispositif selon l'une quelconque des revendications 7 à 9, dans lequel le dispositif est une station de base.

11. Système comprenant le dispositif pour une transmission multipoint coordonnée, CoMP, selon l'une quelconque des revendications 7 à 9.

FIG. 1

FIG. 2

Obtain reference signal received power RSRP of a cell in a measurement set of a user equipment — S301

Determine that an RSRP difference between a first cell and a second cell other than a serving cell in the measurement set of the UE is greater than a preset threshold — S302

Combine a cell whose RSRP is greater between the first cell and the second cell with the serving cell of the UE into a coordinated set of the UE — S303

Perform CoMP on the UE — S304

FIG. 3

Obtain reference signal received power of a cell in a measurement set of a UE ⌐ S401

Determine that an RSRP difference between a first cell and a second cell other than a serving cell in the measurement set of the UE is greater than a preset threshold ⌐ S402

Combine a cell whose RSRP is greater between the first cell and the second cell with the serving cell of the UE into a coordinated set of the UE ⌐ S403

Obtain a gain between a post-SINR of the UE in the coordinated set and a post-SINR of the UE in the serving cell ⌐ S404

Perform CoMP on the UE whose gain is greater ⌐ S405

FIG. 4

FIG. 5

RSRP obtaining unit — 601

Determining unit — 602

Transmitting unit — 603

FIG. 6

RSRP obtaining unit — 701

Determining unit — 702

Gain obtaining unit — 703

Transmitting unit — 704

FIG. 7

**EP 2 712 228 B1**

**REFERENCES CITED IN THE DESCRIPTION**

**Patent documents cited in the description**

- WO 2010130277 A1